# EUROPÄISCHE PATENTANMELDUNG

(11) **EP 3 277 007 A1**
(43) Veröffentlichungstag der Anmeldung: **31.01.2018**
(21) Anmeldenummer: 16182065.9
(22) Anmeldetag: 29.07.2016
(51) Int. Cl.: H04W 12/06

(54) **MOBILES KOMMUNIKATIONSGERÄT**

(71) Anmelder: Deutsche Telekom AG, 53113 Bonn (DE)
(72) Erfinder: Seifert, Olaf, 27308 Kirchlinteln (DE)
(74) Vertreter: Patentship Patentanwaltsgesellschaft mbH

(57) **Zusammenfassung**

Die vorliegende Erfindung betrifft ein mobiles Kommunikationsgerät (100) für die Kommunikation über ein Kommunikationsnetzwerk, mit einem elektronischen Teilnehmeridentifikationsmodul (101); einem Speicher (103) zur Speicherung einer Mehrzahl von Kommunikationsprofilen für das elektronische Teilnehmeridentifikationsmodul (101); und einem Prozessor (105), welcher ausgebildet ist, ein Kommunikationsprofil aus der Mehrzahl von Kommunikationsprofilen gemäß einer Profilauswahlregel aus dem Speicher (103) auszuwählen und für die Kommunikation des mobilen Kommunikationsgerätes in einem Mobilfunknetzwerk bereitzustellen.

## Beschreibung

Die vorliegende Erfindung betrifft das Gebiet der elektronischen Teilnehmeridentifikationsmodule (eSIM: electronic Subscriber Identification Module).

Elektronische Teilnehmeridentifikationsmodule (eSIMs) sind in mobilen Kommunikationsgeräten als festverdatete Hardwareschaltungen implementiert. Für eine Kommunikation über ein Kommunikationsnetzwerk benötigt jedes eSIM ein Kommunikationsprofil (eSIM-Profil), das einem Betreiber des Kommunikationsnetzwerks zugeordnet ist. Das Kommunikationsprofil bestimmt die Kommunikationsfähigkeit, wie beispielsweise ein Datenvolumen für das mit einem eSIM ausgestattete mobile Kommunikationsgerät in einem Kommunikationsnetzwerk eines
Mobilfunknetzwerkbetreibers.

Es ist die Aufgabe der Erfindung, ein effizientes Konzept zur Handhabung von mehreren Kommunikationsprofilen für ein elektronisches Teilnehmeridentifikationsmodul zu schaffen.

Diese Aufgabe wird durch die Merkmale der unabhängigen Ansprüche gelöst. Vorteilhafte Weiterbildungsformen sind Gegenstand der abhängigen Ansprüche, der Figuren sowie der Beschreibung.

Die Erfindung basiert auf der Erkenntnis, dass die obige Aufgabe durch eine Bereitstellung von mehreren Kommunikationsprofilen für ein elektronisches Teilnehmeridentifikationsmodul und eine regelbasierte Auswahl eines zu nutzenden Kommunikationsprofils in einem Mobilfunkgerät.

Gemäß einem ersten Aspekt betrifft die Erfindung ein mobiles Kommunikationsgerätfür die Kommunikation über ein Kommunikationsnetzwerk, mit: einem elektronischen Teilnehmeridentifikationsmodul; einem Speicher zur Speicherung einer Mehrzahl von Kommunikationsprofilen für das elektronische Teilnehmeridentifikationsmodul, insbesondere eSIM; einem Prozessor, welcher ausgebildet ist, ein Kommunikationsprofil aus der Mehrzahl von Kommunikationsprofilen gemäß einer Profilauswahlregel aus dem Speicher auszuwählen und für die Kommunikation des mobilen Kommunikationsgerätes in einem Mobilfunknetzwerk bereitzustellen.

Durch die Bereitstellung des Kommunikationsprofils, beispielsweise eines eSIM-Profils, wird dieses beispielsweise in das elektronische Teilnehmeridentifikationsmodul übernommen oder als aktiv gekennzeichnet, oder für die Kommunikation verwendet.

Die Bereitstellung, Aktivierung bzw. Verwendung des Kommunikationsprofils kann in einer Ausführungsform wie bei eSIM-Pofilen implementiert werden.

In einer Ausführungsform definiert die Profilauswahlregel die Auswahl eines Kommunikationsprofiles in Abhängigkeit von einer Kommunikationscharakteristik des mobilen Kommunikationsgerätes, und wobei der Prozessor ausgebildet ist, die Kommunikationscharakteristik zu erfassen bzw. zu überwachen.

In einer Ausführungsform betrifft die Kommunikationscharakteristik eine Datenrate, eine Bandbreite, eine Charakteristik eines Kommunikationsdienstes, eine geographische Lokalisierung des mobilen Kommunikationsgerätes, eine Funkzugangstechnologie, insbesondere LTE, UMTS, oder WLAN, QoS (Quality of Service), eine Tageszeit, eine Nutzungsart des mobilen Kommunikationsgerätes.

In einer Ausführungsform gibt die Profilauswahlregel zumindest ein Kommunikationsprofil für die erfasste Kommunikationscharakteristik vor, und wobei der Prozessor ausgebildet ist, das für die erfasste Kommunikationscharakteristik gemäß der Profilauswahlregel vorgegebene Kommunikationsprofil aus dem Speicher auszulesen.

In einer Ausführungsform gibt die Profilauswahlregel eine Priorisierung von Kommunikationsprofilen für die erfasste Kommunikationscharakteristik vor, und wobei der Prozessor ausgebildet ist, zu überprüfen, ob für die erfasste Profilcharakteristik ein gemäß der Priorisierung prioritätshöchstes Kommunikationsprofil in dem Speicher abgelegt ist, und das prioritätshöchste Kommunikationsprofil auszuwählen, oder, falls das prioritätshöchste Kommunikationsprofil nicht gespeichert ist, ein prioritätsniedrigeres Kommunikationsprofil aus dem Speicher auszulesen.

In einer Ausführungsform ist die Kommunikationsschnittstelle ausgebildet, die Mehrzahl der Kommunikationsprofile von einem Profilserver, insbesondere von einem SMDP+-Server, über das Kommunikationsnetzwerk abzurufen.

In einer Ausführungsform ist die Kommunikationsschnittstelle ausgebildet ist, die Profilauswahlregel von einem Profilregelserver oder von einem Profilserver, insbesondere von einem SMDP+-Server, abzurufen.

In einer Ausführungsform ist in dem Speicher eine Mehrzahl von Profilauswahlregeln für unterschiedliche Kommunikationscharakteristiken gespeichert, und wobei der Prozessor ausgebildet ist, die Profilauswahlregel in Abhängigkeit von der Kommunikationscharakteristik aus dem Speicher auszulesen.

In einer Ausführungsform ist der Prozessor ausgebildet, die Kommunikationscharakteristik zu erfassen und die Profilauswahlregel an die erfasste Kommunikationscharakteristik, insbesondere hinsichtlich einer Datenrate, einer Bandbreite, einer Charakteristik eines Kommunikationsdienstes, einer geographischen Lokalisierung des mobilen Kommunikationsgerätes, einer Funkzugangstechnologie, insbesondere LTE, UMTS, oder WLAN, QoS (Quality of Service), einer Tageszeit, einer Nutzungsart des mobilen Kommunikationsgerätes zu ändern, insbesondere hinsichtlich der Auswahl des Kommunikationsprofils.

In einer Ausführungsform ist der Prozessor ausgebildet, die Kommunikationscharakteristik zu erfassen, für die erfasste Kommunikationscharakteristik ein Kommunikationsprofil zu bestimmen und die Profilauswahlregel für die erfasste Kommunikationscharakteristik zu ändern, um in der Auswahlregel das für die erfasste Kommunikationscharakteristik bestimmte Kommunikationsprofil vorzugeben.

In einer Ausführungsform ist der Speicher ausgebildet, die Profilauswahlregel zu speichern.

Gemäß einem zweiten Aspekt betrifft die Erfindung ein Subnetzwerk zur Bereitstellung von Profilauswahlregeln für die Auswahl von Kommunikationsprofilen für ein elektronisches Teilnehmeridentifikationsmodul eines mobilen Kommunikationsgerätes, mit: einem Profilregelserver, welcher ausgebildet ist, eine Mehrzahl von Profilauswahlregeln für die Auswahl von Kommunikationsprofilen für ein elektronisches Teilnehmeridentifikationsmodul zu speichern, wobei der Profilregelserver ausschließlich über das Subnetzwerk adressierbar ist.

In einer Ausführungsform ist der Profilregelserver ausgebildet, von einem mobilen Kommunikationsgerät oder von einem Profilserver, insbesondere von einem SMDP+- Server, eine Anfrage nach einer Profilauswahlregel oder nach einer Mehrzahl von Profilauswahlregeln zu erhalten, und die Profilauswahlregel an das mobile Kommunikationsgerät oder den Profilserver auszusenden.

In einer Ausführungsform umfasst die Anfrage eine elektronische Identifikation (eID) des elektronischen Teilnehmeridentifikationsmoduls umfasst, und wobei der Profilregelserver ausgebildet ist, die Profilauswahlregel anhand der elektronische Identifikation aus einer Mehrzahl von Profilauswahlregeln auszuwählen.

Gemäß einem dritten Aspekt betrifft die Erfindung Verfahren zum Bereitstellen eines Kommunikationsprofils für ein elektronisches Teilnehmeridentifikationsmodul, insbesondere ein eSIM, eines mobilen Kommunikationsgerätes, welcher ferner einen Speicher mit einer Mehrzahl von Kommunikationsprofilen für das elektronische Teilnehmeridentifikationsmodul aufweist, mit: Auswählen eines Kommunikationsprofils aus einer Mehrzahl von Kommunikationsprofilen gemäß einer Profilauswahlregel aus dem Speicher; und Bereitstellen der ausgewählten Profilauswahlregel für die Kommunikation des mobilen Kommunikationsgerätes in einem Mobilfunknetzwerk.

Das Verfahren kann mittels des mobilen Kommunikationsgerätes durchgeführt werden.

Weitere Ausführungsformen der Erfindung werden Bezug nehmend auf die beiliegenden Figuren erläutert. Es zeigen:
Fig. 1 ein mobiles Kommunikationsgerät; und
Fig. 2 ein Kommunikationsszenario.

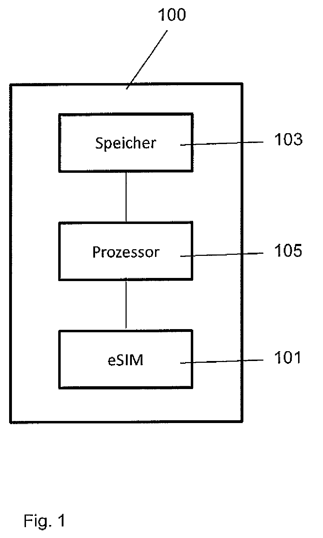

Fig. 1 zeigt ein mobiles Kommunikationsgerät 100, beispielsweise ein Smartphone oder ein Sensor, für die Kommunikation über ein Kommunikationsnetzwerk, mit einem elektronischen Teilnehmeridentifikationsmodul 101, beispielsweise eSIM, einem Speicher 103 zur Speicherung einer Mehrzahl von Kommunikationsprofilen für das elektronische Teilnehmeridentifikationsmodul 101 und einem Prozessor 105, welcher ausgebildet ist, ein Kommunikationsprofil aus der Mehrzahl von Kommunikationsprofilen gemäß einer Profilauswahlregel aus dem Speicher 103 auszuwählen und für die Kommunikation des mobilen Kommunikationsgerätes in einem Mobilfunknetzwerk bereitzustellen.

Das mobile Kommunikationsgerät 100 kann ein Smartphone, ein Sensor, eine Uhr, insbesondere eine Smartwatch, oder ein Kommunikationsgerät, welches dem Internet of Things zugeordnet ist.

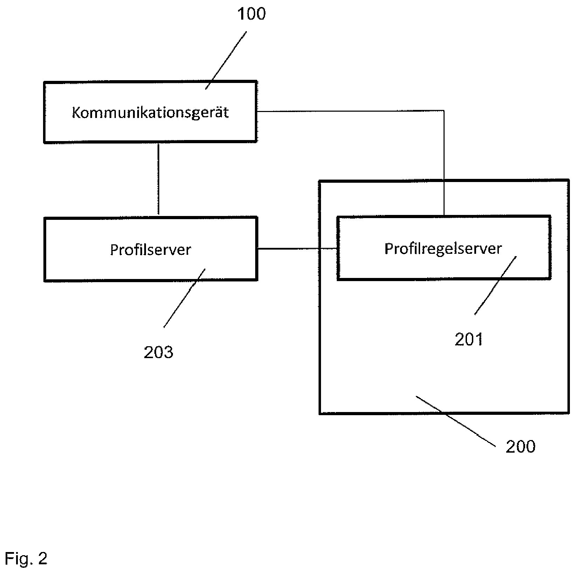

Fig. 2 zeigt ein Kommunikationsszenario mit dem mobilen Kommunikationsgerät 100, einem Profilregelserver 201 und einem Profilserver 203, beispielsweise einem SMDP+-Server.

In einer Ausführungsform übermittelt das mobile Kommunikationsgerät 100 an den Profilserver 203 eine Anfrage nach einem oder mehreren Kommunikationsprofilen, beispielsweise eSIM-Profilen. Die Anfrage kann die elektronische Identifikation des elektronischen Teilnehmeridentifikationsmoduls 101 enthalten.

Der Profilserver 203 übermittelt ansprechend auf die Anfrage das oder die angefragten Kommunikationsprofile, beispielsweise N-Kommunikationsprofile, an das mobile Kommunikationsgerät 100.

In einer Ausführungsform übermittelt das mobile Kommunikationsgerät 100 daraufhin eine Regelanfrage nach einer oder mehreren Profilauswahlregeln an den Profilserver 203, welcher die Anfrage an den Profilregelserver 201 übermittelt. Die Regelanfrage kann die die elektronische Identifikation (eID) des elektronischen Teilnehmeridentifikationsmoduls 101 und/oder eine Angabe über die vom Profilserver bereitgestellten Profilregeln enthalten. Der Profilregelserver 201 übermittelt daraufhin die angeforderte Profilregel oder die angeforderten Profilregeln an das mobile Kommunikationsgerät 100.

In einer alternativen Ausführungsform, welche in Fig. 2 ebenfalls dargestellt ist, kann das mobile Kommunikationsgerät 100 die Anfrage ohne den Umweg über den Profilserver 203 direkt an den Profilregelserver 201 übermitteln.

Der Profilregelserver 201 kann in einem Kommunikationsnetzwerk, wie beispielsweise in einem LTE- oder UMTS-Kommunikationsnetzwerk angeordnet sein.

In einer alternativen Ausführungsform, welche in Fig. 2 optional dargestellt ist, kann der Profilregelserver 201 in einem Subnetzwerk 200 angeordnet sein, welches einen Dienst für die Bereitstellung von Profilauswahrregeln bereitstellt. Das Subnetzwerk 200 kann ein Punkt-zu-Punkt-Subnetzwerk für die Verbindung zwischen dem Mobilfunkgerät 100 oder dem Profilserver 203 und dem Profilregelserver 201 sein. Das Subnetzwerk kann ein Slice eines 5G-Kommunikationsnetzwerks sein.

Die Profilauswahlregel kann ferner einen Tag oder einen Tageszeit anzeigen, welche die Nutzung (privat oder geschäftlich) des mobilen Kommunikationsgerätes 100 anzeigt. Bei einer privaten Nutzung kann ein privates Kommunikationsprofil und bei einer geschäftlichen Nutzung kann ein geschäftliches Kommunikationsprofil mit beispielswese mehr Bandbreite ausgewählt werden.

Die Kommunikationsprofile können ferner unterschiedlichen Tarifen, Verträgen und/oder Mobilfunkanbietern zugeordnet sein.

Die Profilauswahlregel kann ferner den passenden Funkzugriff wie beispielsweise WiFi, UMTS oder LTE für das mobile Kommunikationsgerät 100 betreffen und das hierzu passende Kommunikationsprofil anzeigen.

Die Profilauswahlregel kann ferner den jeweils passenden Service oder Dienst, wie beispielswiese einen bezahlten Dienst oder einen kostenfreien Dienst betreffen und das hierfür jeweils vorgesehene Kommunikationsprofil anzeigen.

Die Profilauswahlregel kann ferner den günstigsten Tarif betreffen und das entsprechende Kommunikationsprofil anzeigen.

Die Profilauswahlregel oder die Profilauswahlregeln können in einer Ausführungsform zur Steuerung einer Priorität der Kommunikationsprofile eingesetzt werden.

In einer Ausführungsform kann ein Service-Provider Kommunikationsprofile kombiniert mit Profilauswahlregel(n) für beispielsweise den besten Mobilfunkträger wie WiFi, UMTS oder LTE und/oder die optimale Kommunikationszeit, beispielsweise hinsichtlich eines Tarifs, oder als Reise-Packages bereitstellen, in welchen für die gegebene Lokalisierung des mobilen Kommunikationsgerätes 100 eine Kommunikationsverbindung ausgewählt werden kann.

## Patentansprüche

1. Mobiles Kommunikationsgerät (100) für die Kommunikation über ein Kommunikationsnetzwerk, mit:
einem elektronischen Teilnehmeridentifikationsmodul (101);
einem Speicher (103) zur Speicherung einer Mehrzahl von Kommunikationsprofilen für das elektronische Teilnehmeridentifikationsmodul (101);
einem Prozessor (105), welcher ausgebildet ist, ein Kommunikationsprofil aus der Mehrzahl von Kommunikationsprofilen gemäß einer Profilauswahlregel aus dem Speicher (103) auszuwählen und für die Kommunikation des mobilen Kommunikationsgerätes in einem Mobilfunknetzwerk bereitzustellen.

2. Mobiles Kommunikationsgerät (100) nach Anspruch 1, wobei die Profilauswahlregel die Auswahl eines Kommunikationsprofils in Abhängigkeit von einer Kommunikationscharakteristik des mobilen Kommunikationsgerätes (100) definiert, und wobei der Prozessor (105) ausgebildet ist, die Kommunikationscharakteristik zu erfassen.

3. Mobiles Kommunikationsgerät (100) nach Anspruch 2, wobei die Kommunikationscharakteristik eine Datenrate, eine Bandbreite, eine Charakteristik eines Kommunikationsdienstes, eine geographische Lokalisierung des mobilen Kommunikationsgerätes, eine Funkzugangstechnologie, insbesondere LTE, UMTS, oder WLAN, QoS (Quality of Service), eine Tageszeit, eine Nutzungsart des mobilen Kommunikationsgerätes ist oder betrifft.

4. Mobiles Kommunikationsgerät (100) nach Anspruch 2 oder 3, wobei die Profilauswahlregel zumindest ein Kommunikationsprofil für die erfasste Kommunikationscharakteristik vorgibt, und wobei der Prozessor (105) ausgebildet ist, das für die erfasste Kommunikationscharakteristik gemäß der Profilauswahlregel vorgegebene Kommunikationsprofil aus dem Speicher (103) auszulesen.

5. Mobiles Kommunikationsgerät (100) nach Anspruch 2, 3 oder 4, wobei die Profilauswahlregel eine Priorisierung von Kommunikationsprofilen für die erfasste Kommunikationscharakteristik vorgibt, und wobei der Prozessor (105) ausgebildet ist, zu überprüfen, ob für die erfasste Profilcharakteristik ein gemäß der Priorisierung prioritätshöchstes Kommunikationsprofil in dem Speicher (103) abgelegt ist, und das prioritätshöchste Kommunikationsprofil auszuwählen, oder, falls das prioritätshöchste Kommunikationsprofil nicht gespeichert ist, ein prioritätsniedrigeres Kommunikationsprofil aus dem Speicher (103) auszulesen.

6. Mobiles Kommunikationsgerät (100) nach einem der vorstehenden Ansprüche, wobei das mobile Kommunikationsgerät (100) oder eine Kommunikationsschnittstelle des mobilen Kommunikationsgeräts (100) ausgebildet ist, die Mehrzahl der Kommunikationsprofile von einem Profilserver, insbesondere von einem SMDP+-Server, über das Kommunikationsnetzwerk abzurufen.

7. Mobiles Kommunikationsgerät (100) nach einem der vorstehenden Ansprüche, wobei das mobile Kommunikationsgerät (100) oder eine Kommunikationsschnittstelle das mobilen Kommunikationsgeräts (100) ausgebildet ist, die Profilauswahlregel von einem Profilregelserver oder von einem Profilserver, insbesondere von einem SMDP+-Server, abzurufen.

8. Mobiles Kommunikationsgerät (100) nach einem der vorstehenden Ansprüche, wobei in dem Speicher (103) eine Mehrzahl von Profilauswahlregeln für unterschiedliche Kommunikationscharakteristiken gespeichert ist, und wobei der Prozessor (105) ausgebildet ist, die Profilauswahlregel in Abhängigkeit von der Kommunikationscharakteristik aus dem Speicher (103) auszulesen.

9. Mobiles Kommunikationsgerät (100) nach einem der vorstehenden Ansprüche, wobei der Prozessor (105) ausgebildet ist, die Kommunikationscharakteristik zu erfassen und die Profilauswahlregel an die erfasste Kommunikationscharakteristik, insbesondere hinsichtlich einer Datenrate, einer Bandbreite, einer Charakteristik eines Kommunikationsdienstes, einer geographischen Lokalisierung des mobilen Kommunikationsgerätes (100), einer Funkzugangstechnologie, insbesondere LTE, UMTS, oder WLAN, QoS (Quality of Service), einer Tageszeit, einer Nutzungsart des mobilen Kommunikationsgerätes (100) zu ändern, insbesondere hinsichtlich der Auswahl des Kommunikationsprofils.

10. Mobiles Kommunikationsgerät (100) nach einem der vorstehenden Ansprüche, wobei der Prozessor (105) ausgebildet ist, die Kommunikationscharakteristik zu erfassen, für die erfasste Kommunikationscharakteristik ein Kommunikationsprofil zu bestimmen und die Profilauswahlregel für die erfasste Kommunikationscharakteristik zu ändern, um in der Auswahlregel das für die erfasste Kommunikationscharakteristik bestimmte Kommunikationsprofil vorzugeben.

11. Mobiles Kommunikationsgerät (100) nach einem der vorstehenden Ansprüche, wobei die Profilauswahlregel in dem Speicher (103) gespeichert ist.

12. Subnetzwerk (200) zur Bereitstellung von Profilauswahlregeln für die Auswahl von Kommunikationsprofilen für ein elektronisches Teilnehmeridentifikationsmodul eines mobilen Kommunikationsgerätes, mit:
einem Profilregelserver (201), welcher ausgebildet ist, eine Mehrzahl von Profilauswahlregeln für die Auswahl von Kommunikationsprofilen für ein elektronisches Teilnehmeridentifikationsmodul (101) zu speichern, wobei der Profilregelserver (201) ausschließlich über das Subnetzwerk (200) adressierbar ist.

13. Subnetzwerk (200) nach Anspruch 12, wobei der Profilregelserver (201) ausgebildet ist, von einem mobilen Kommunikationsgerät oder von einem Profilserver (203), insbesondere von einem SMDP+, eine Anfrage nach einer Profilauswahlregel oder nach einer Mehrzahl von Profilauswahlregeln zu erhalten, und die Profilauswahlregel an das mobile Kommunikationsgerät oder den Profilserver auszusenden.

14. Subnetzwerk (200) nach Anspruch 12 oder 13, wobei die Anfrage eine elektronische Identifikation (eID) des elektronischen Teilnehmeridentifikationsmoduls (101) umfasst, und wobei der Profilregelserver (201) ausgebildet ist, die Profilauswahlregel anhand der elektronische Identifikation aus einer Mehrzahl von Profilauswahlregeln auszuwählen.

15. Verfahren zum Bereitstellen eines Kommunikationsprofils für ein elektronisches Teilnehmeridentifikationsmodul (101), insbesondere ein eSIM, eines mobilen Kommunikationsgerätes (100), welcher ferner einen Speicher (103) mit einer Mehrzahl von Kommunikationsprofilen für das elektronische Teilnehmeridentifikationsmodul (101) aufweist, mit:
Auswählen eines Kommunikationsprofils aus einer Mehrzahl von Kommunikationsprofilen gemäß einer Profilauswahlregel aus dem Speicher (103); und
Bereitstellen der ausgewählten Profilauswahlregel für die Kommunikation des mobilen Kommunikationsgerätes (100) in einem Mobilfunknetzwerk.
